(19) **Europäisches Patentamt**
**European Patent Office**
**Office européen des brevets**

(11) **EP 3 971 659 A1**

(12) **EUROPEAN PATENT APPLICATION**

(43) Date of publication:
**23.03.2022 Bulletin 2022/12**

(21) Application number: **20197187.6**

(22) Date of filing: **21.09.2020**

(51) International Patent Classification (IPC):
***G05B 13/02*** *(2006.01)* ***G06N 3/08*** *(2006.01)*
***G01S 7/41*** *(2006.01)*

(52) Cooperative Patent Classification (CPC):
**G01S 7/02; G05B 13/0265; G06N 3/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Fraunhofer-Gesellschaft zur Förderung der
angewandten Forschung e.V.
80686 München (DE)**
• **HENSOLDT Sensors GmbH
82024 Taufkirchen (DE)**

(72) Inventors:
• **DURST, Sebastian
53343 Wachtberg (DE)**
• **BRÜGGENWIRTH, Stefan
53343 Wachtberg (DE)**
• **FISCHER, Christoph
89077 Ulm (DE)**

(74) Representative: **2SPL Patentanwälte PartG mbB
Landaubogen 3
81373 München (DE)**

Remarks:
Amended claims in accordance with Rule 137(2)
EPC.

(54) **RADAR RESOURCE MANAGEMENT SYSTEM, APPARATUS TO TRAIN AN AGENT IN A
RADAR SYSTEM USING REINFORCEMENT LEARNING, METHOD FOR MANAGING RADAR
RESOURCES, AND METHOD TO TRAIN AN AGENT IN A RADAR SYSTEM USING
REINFORCEMENT LEARNING**

(57)    A radar resource management system comprises a processing circuit comprising a trained agent, which is configured to determine a task configuration having a high utility and to set the task configuration as a record on a job list.

Figure 4c

## Description

### Field

Examples relate to radar resource management systems, apparatuses to train an agent in a radar system, and to methods and computer programs for managing radar resources and to train an agent in a radar system.

### Background

The evolution of radar and antenna technology may enable modern radar systems to simultaneously perform different tasks using the available resources, which is why resource management including prioritization, parameter selection and scheduling of observation tasks is an essential part of a modern radar system. While a single task, such as for example tracking a target, searching for new targets or jamming another radar system can be fulfilled with multiple different resources allocated as a task configuration, the available resources should be distributed amongst the tasks such that every task can be fulfilled successfully. If more tasks are requested than can be executed by the available resources, the radar resource management system needs to decide which tasks to ignore.

A radar resource management system may so have a list of tasks to fulfil, each of which may be performed using multiple possible configurations. Conventional methods follow a brute force or heuristic approach to determine the chosen task configurations used for each task in the list in that every possible task configuration is determined for every individual task of the list before a global optimization and scheduling is performed. The optimization results in a chosen task configuration for every task of the list. Considering abundant possible task configurations may be very time consuming and computationally expensive, which may in turn result in the inability to perform the resource allocation in real time.

### Summary

Therefore, there is a need to provide a more efficient way to determine chosen task configurations and to schedule radar resources.

This need is addressed by the subject matter of the independent claims.

An embodiment relates to a radar resource management system, comprising a processing circuit comprising a trained agent, which is configured to determine a task configuration having a high utility, and set the task configuration as a record on a job list. Using a trained agent may serve to determine only those task configurations that have a high utility making them good candidates for being chosen as a selected task configuration during a subsequent optimization. Disregarding multiple other possible task configurations not having a high utility by using the trained agent may result in a significant reduction of computational complexity and a strong increase in processing speed without overall performance sacrifice.

An embodiment relates to an apparatus to train an agent in a radar system using reinforcement learning, comprising a processing circuit comprising a model of an environment configured to receive a task configuration as input data from the agent. The processing circuit is further configured to determine a reward signal and a new task configuration based on the task configuration, and to output the reward signal and the new task configuration.

A further embodiment relates to a radar resource management system comprising a processing circuit comprising a trained agent, which is configured to determine a selected task configuration from multiple possible task configurations for a task, the selected task configuration resulting in high utility for the resources used.

A further embodiment relates to a radar resource management system, comprising a processing circuit comprising a trained agent, which is configured to schedule selected task configurations into a sequence, each selected task configuration being determined from multiple possible task configurations for a task such that a selected task configuration results in a high utility for the resources used.

An embodiment of a method for managing radar resources comprises determining a task configuration having a high utility and set the task configuration as a record on a job list.

An embodiment of a method to train an agent in a radar system using reinforcement learning comprises receiving a task configuration as input data for a model of an environment from the agent and determining a reward signal and a new task configuration by the model of the environment based on the task configuration.

Embodiments of the present disclosure train an agent or use a trained agent to determine a task configurations for tasks to be performed by a radar system that have a high utility, thereby significantly saving on computational complexity for scheduling radar resources.

### Brief description of the Figures

Some examples of radar resource management systems, apparatuses and/or methods will be described in the following by way of example only, and with reference to the accompanying figures, in which

Fig. 1a shows a block diagram of a radar resource management system according to a first embodiment of the present disclosure;

Fig. 1b shows a block diagram of a trained agent according to the first embodiment of the present disclosure;

Fig. 1c shows a block diagram of a radar resource management comprising a trained agent, a global optimizer and a scheduler according to the first embodiment of the present disclosure;

Fig. 1d shows a flow chart of a corresponding method for managing radar resources according to a first embodiment of the present disclosure;

Fig. 2a shows a block diagram of a radar resource management system according to a second embodiment of the present disclosure;

Fig. 2b shows resource allocation performed by a trained agent and a scheduler according to an embodiment of the present disclosure;

Fig. 3a shows a block diagram of a radar resource management system according to a third embodiment of the present disclosure;

Fig. 3b shows a block diagram of combined resource allocation and scheduling performed by a trained agent according to the third embodiment of the present disclosure;

Fig. 4a shows a block diagram of an apparatus to train an agent in a radar system using reinforcement learning according to a first embodiment of the present disclosure;

Fig. 4b shows a block diagram of a model of an environment according to the first embodiment of the present disclosure;

Fig. 4c shows a block diagram of a trained agent interacting with the model of the environment according to the first embodiment of the present disclosure; and

Fig. 4d shows a flow chart of a method to train an agent in a radar system using reinforcement learning according to the first embodiment of the present disclosure.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples. [0015]　Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

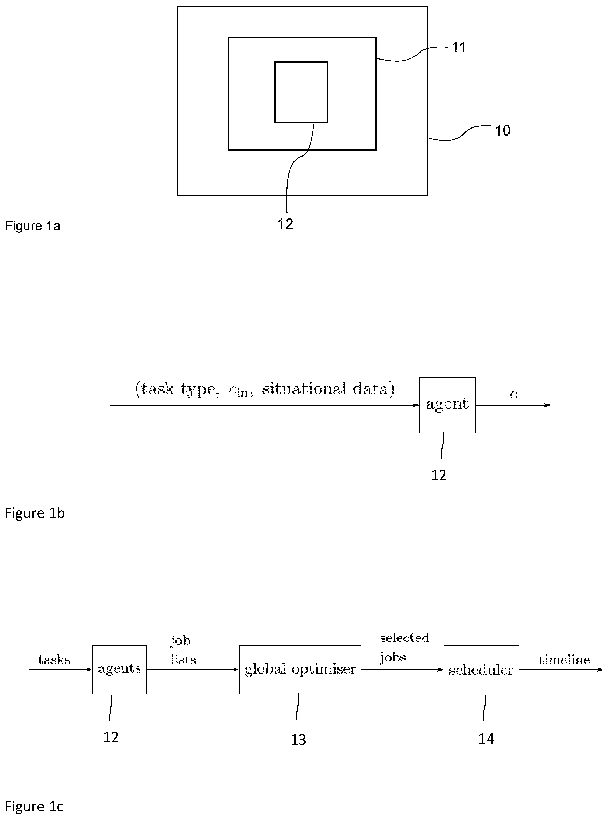

Figure 1a shows a block diagram of a radar resource management system 10 according to a first embodiment of the present disclosure. The radar resource management system 10 according to the first embodiment comprises a processing circuit 11 comprising a trained agent 12. The trained agent 12 may be for example a trained RL, reinforcement learning, agent. The concept of reinforcement learning comprises training an agent using an environment, which outputs a reward signal to improve the performance of the agent. The trained agent 12 is configured to determine a task configuration having a high utility and to set the task configuration as a record on a job list. A radar system may have some parameters that are configurable for every task, such as for example radar transmit energy, pulse repetition rate, integration time, antenna beamwidth to just name some of the possible parameters that may be varied during operation of a radar system. A task configuration may be a complete set of parameters that are to be set to operate the radar system. In other words, a task configuration may comprise all parameters of a radar system that are to be set to operate the radar system. A high utility may be defined as a superior utility achieved by a task configuration as compared to alternative task configurations that are principally also usable to fulfill the same task. For example, a utility may be rated as high if it is higher than the average utility of all possible task configuration or if it is higher than 80 % of the utilities of all possible tasks configurations. The utility may, for example, be a quantity that describes the usefulness of the task configuration according to a predetermined criterion and in a reproducible manner.

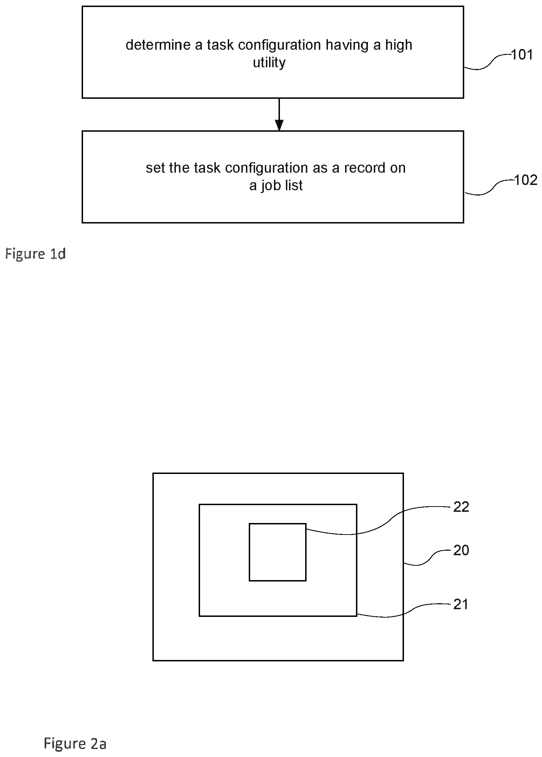

Using a trained agent to determine only those task configurations that have a high utility making them a promising candidate to be chosen in a subsequent global optimization as illustrated in fig. 1.c may result in a significant reduction of computational complexity and a strong increase in processing speed.

In some embodiments, the trained agent may be configured to receive as input data at least one task configuration indicating a use of radar resources. This may enable the trained agent to improve the use of radar resources by determining a task configuration usable subsequently.

In some embodiments, the trained agent may be configured to receive as input data at least one task type indicating a task to be performed using the radar resource.

In some embodiments, the trained agent may be configured to receive as input data situational data indicating properties of an object to be observed or the current radar propagation conditions. This may enable to obtain better results in determining task configurations as compared to an approach where an agent is not aware of any property of the target or of the task to be performed.

In some embodiments the trained agent may be configured to determine a task configuration having a high utility resource ratio. The determination of the utility resource ratio may provide a suitable measure to determine the task configuration. Determining task configurations having a high utility resource ratio may serve as a proper criterion to finally end up with a nearly optimal use of the available resources for the multiple tasks to be fulfilled.

In some embodiments, the trained agent may be configured to determine a task configuration having the high utility resource ratio according to the following equation:

$$\frac{u(c) - u(c_{in})}{r(c) - r(c_{in})}$$

wherein u is a function modelling task utility, r is a scalar measure for resource consumption and $c_{in}$ is an input task configuration. This may enable to provide a measure for the determination of task configuration.

According to some embodiments, the trained agent is based on a network topology having at least two interconnected layers of nodes, wherein the network topology is configured to not interconnect nodes associated to task configurations and to situational data between the first layer and the second layer. As compared to other network topologies, not interrelating the task configuration and the situational data while transiting into the second layer of the network topology constituting the trained agent prove to provide superior results.

In some embodiments the, processing circuit may further comprise a global optimizer, which is configured to determine a selected task configuration from task configurations in a job list by maximizing a utility for available resources. Thereby the resources may be allocated to all tasks in an optimal way.

Figure 1b shows a block diagram of a particular implementation of a trained agent 12 according to the first embodiment of the present disclosure. The trained agent 12 receives, as an input, a tuple comprising at least one task configuration indicating a use of radar resources, at least one task type indicating a task to be performed using the radar resource and situational data indicating properties of an object to be observed using the radar resource. The task type defines the task to be performed using the radar system or the goal to be achieved by its use. Tasks may principally be arbitrary, such as for example tracking an already known target, cooperative or non-cooperative identification of targets or scanning the hemisphere to find new targets. Tasks may not only be limited to tasks in connection of observing obj ects. Further tasks may, for example be jamming another radar system or communicating by means of the radar beam. Situational data may be any information on the environment the radar system is operated on or on the target the task is to be performed for. An example for situational data may be a previously determined speed or distance of the target to be observed. As illustrated in fig. 1b, the trained agent 12 further receives a task configuration $c_{in}$ as previously determined for the same task as an input. Based on those input parameters, the trained agent 12 outputs a new task configuration c capable to perform the task and having a high utility.

Figure 1c shows a block diagram of a radar resource management system 10 comprising the trained agent 12, a global optimizer 13 and a scheduler 14. The trained agent 12 receives tasks. For every task to be fulfilled by a radar system, the trained agent 12 creates a job ist comprising multiple task configurations having a high utility. The job lists for all tasks are used as an input to a global optimizer 13. The global optimizer 13 is configured to determine a selected task configuration from the task configurations of every job list. As a result, the selected task configuration used for every task is determined by the global optimizer so that the radar system can be operated using the resource distribution given by the selected tasks. The selection of the selected tasks (the global optimization) from the job lists can principally be based on arbitrary criteria. One approach is maximizing the utility for the available resources, i.e. the global optimizer 13 may try to achieve the highest utility with the available resources by appropriately selecting the task configurations from the job list. The selected jobs as resulting configurations may be given to the scheduler 14, which may sort the selected jobs timewise on a radar timeline and ultimately output the radar timeline.

For the sake of completeness, Fig. 1d shows a flow chart of an example of a corresponding method for managing radar resources according to a first embodiment of the present disclosure. The method may comprise determine a task configuration having a high utility 101 by a trained agent 12 and setting the task configuration as a record on a job list 102.

Figure 2a shows a block diagram of a radar resource management system 20 according to a second embodiment of the present disclosure. The radar resource management system 20 according to the second embodiment comprises a processing circuit 21 comprising a trained agent 22. The trained agent 22 is configured to determine a selected task configuration from multiple possible task configurations for a task. The selected task configuration resulting in high utility for the resources used. Usually this step is performed for several tasks. Nevertheless, it is possible to perform this step also for one task. The radar resource management system 20 according to the second embodiment differs from the radar resource management system 10 according to the first embodiment in that the trained agent 22 also performs resource allocation. Thus, there is no need for a global optimizer in the radar resource management system 20 according to the second embodiment.

The trained agent 22 according to the second embodiment may receive a tuple comprising at least one task configuration indicating a use of radar resources, at least one task type indicating a task to be performed using the radar resource and situational data indicating properties of an object to be observed using the radar resource.

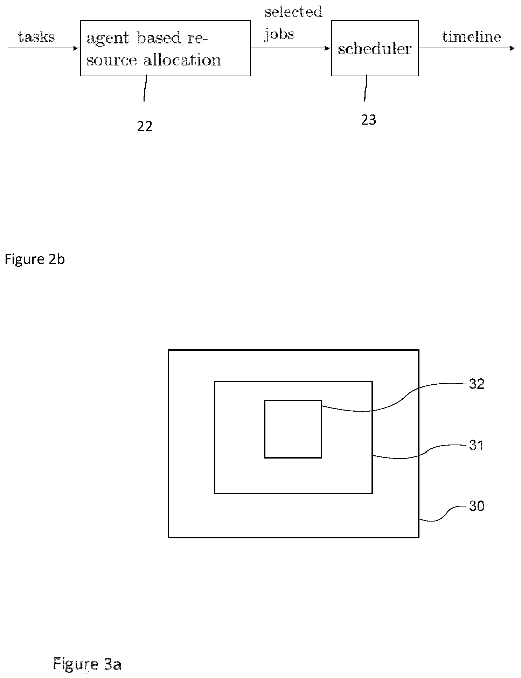

Figure 2b shows a block diagram of a resource allocation performed by a trained agent 22 and a scheduler 23 according to the second embodiment of the present disclosure. The trained agent 22 receives tasks. The trained agent 22 may perform resource allocation and may determine selected task configurations, which may be transmitted to the scheduler 23 as selected jobs, which may place the selected task configurations on a radar timeline. The scheduler 23 may output the radar timeline.

Figure 3a shows a block diagram of a radar resource management system 30 according to a third embodiment of the present disclosure. The radar resource management system 30 according to the third embodiment comprises a processing circuit 31. The processing circuit 31 comprises a trained agent 32, which is configured to schedule selected task configurations into a sequence. Each selected task configuration being determined from multiple possible task configurations for a task such that a selected task configuration results in a high utility for the resources used. The trained agent 32 schedules selected task configurations under consideration of an execution time of the task. The radar resource management system 30 according to the third embodiment differs from the radar resource management system 10 according to the first embodiment in that the trained agent 32 also perform resource allocation and scheduling. Thus, there is no need for a global optimizer and a scheduler in the radar resource management system 30 according to the third embodiment.

The trained agent 32 according to the third embodiment may receive a tuple comprising at least one task configuration indicating a use of radar resources, at least one task type indicating a task to be performed using the radar resource and situational data indicating properties of an object to be observed using the radar resource.

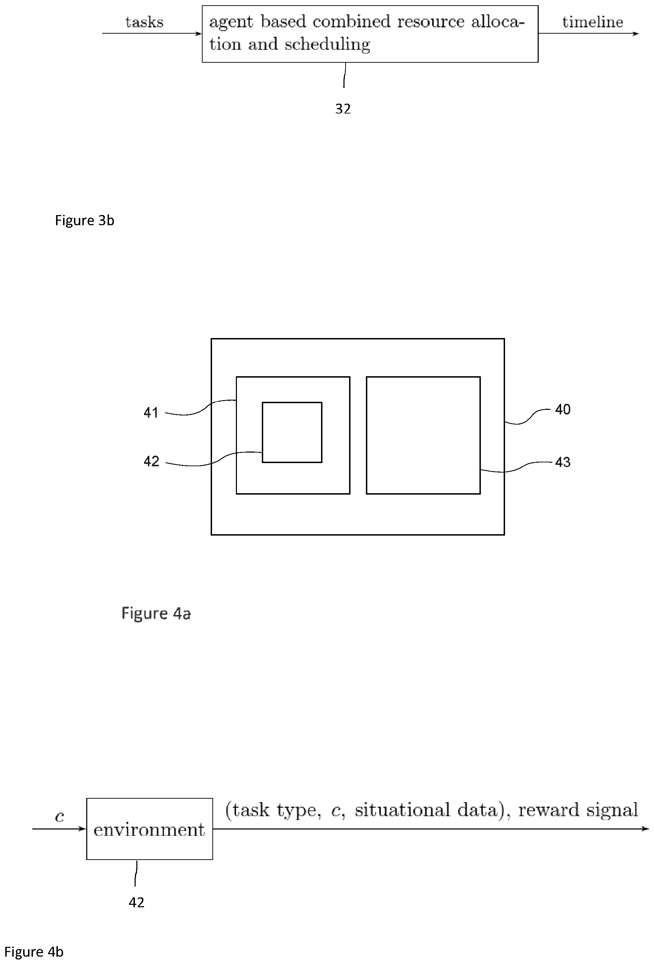

Fig. 3b shows a block diagram of a combined resource allocation and scheduling performed by a trained agent according to the third embodiment of the present disclosure. The trained agent 32 may receive tasks. The trained agent 32 may perform resource allocation and scheduling jointly. The trained agent 32 may output a radar timeline.

The following description relates to both the radar resource management system and to the corresponding method (and computer program) for the first embodiment, the second embodiment and the third embodiment of the present disclosure.

The trained agent 12, 22, 32 may be configured to determine a task configuration having a high utility resource ratio according to the following equation:

$$\frac{u(c) - u(c_{in})}{r(c) - r(c_{in})}$$

wherein u may be a function modelling task utility, r may be a scalar measure for resource consumption and $c_{in}$ may be an input task configuration.

The trained agent 12, 22, 32 may be based on a network topology having at least two interconnected layers of nodes, wherein the network topology may be configured to not interconnect nodes associated to task configurations and to situational data between the first layer and the second layer.

Figure 4a shows a block diagram of an apparatus 40 to train an agent 12, 22, 32 in a radar system using reinforcement learning according to a first embodiment. The apparatus 40 to train the agent 12, 22, 32 in the radar system comprises a processing circuit 41 comprising a model of an environment 42 and an output interface 43. The model of the environment 42 is configured to receive a task configuration as input data from the agent 12, 22, 32, determine a reward signal and a new task configuration based on the task configuration. The output interface 43 is configured to output the reward signal and the new task configuration.

According to some embodiments, the model of the environment may be configured to determine the reward signal based on a utility resource ratio. In some embodiments the model of the environment may be configured to determine the reward signal, which is defined as the ratio of a change in utility du and a change in resource dr. This may enhance the training performance.

In some embodiments, the model of the environment may comprise performance models and functions to determine resource requirements and utility evaluation of a task configuration. According to some embodiments, the processing circuit may further be configured to train the model of the environment based on task configurations used by a radar system and a response received from an environment using the task configuration. In other words, the model may be trained further based on data determined while using the radar system to continuously increase performance of the trained agent.

In some embodiments, the output interface may be configured to output a task type and situational data.

Fig. 4b shows a block diagram of a model of an environment 42 according to the first embodiment of the present disclosure. The model of the environment 42 may receive task configurations and may output the reward signal and a tuple may comprise at least one task configuration indicating a use of radar resources, at least one task type indicating a task to be performed using the radar resource and situational data indicating properties of an object to be observed using the radar resource.

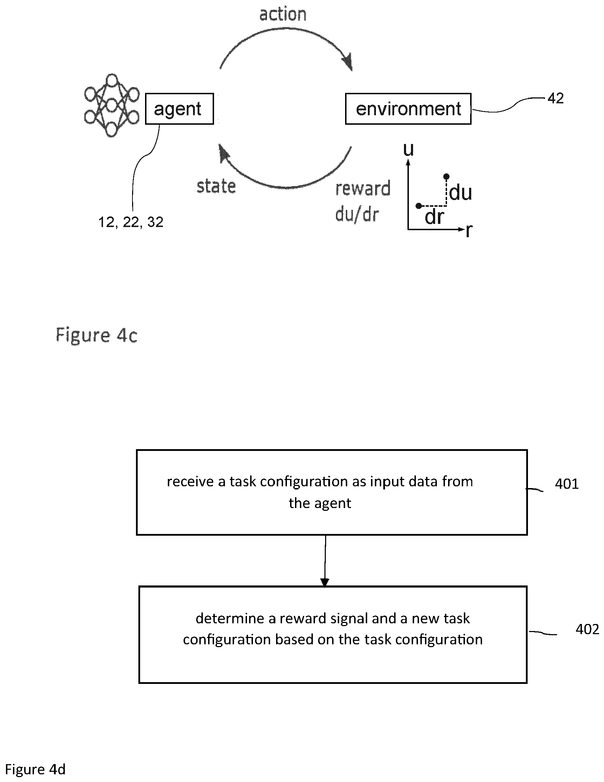

Fig. 4c shows a block diagram of a trained agent 12, 22, 32 interacting with the model of the environment 42 according to the first embodiment of the present disclosure. The model of the environment 42 may transmit the reward signal as the ratio of the change in utility du and the change in resource dr and a state as a tuple comprising task type, task configurations, situational data to the trained agent 12, 22, 32. r indicates a resource consumption. The quantity r may be determined with an arbitrary but reproducible method. The trained agent 12, 22, 23 may transmit an action as a task configuration with a high utility to the model of the environment 42.

For the sake of completeness, Fig. 4d shows a flow chart of an example of a corresponding method to train an agent in a radar system using reinforcement learning. The method comprises receive a task configuration as input data from the agent by a model of an environment 401, determine a reward signal and a new task configuration by the model of the environment based on the task configuration 402.

The model of the environment 42 may be configured to determine the reward signal based on a utility resource ratio. The utility to resource ratio may be defined as the ratio of a change in utility du and a change in resource dr.

The model of the environment 42 may comprise performance models and functions to determine resource requirements and utility evaluation of a task configuration.

The processing circuit 41 may be further configured to train the model of the environment 42 based on task configurations used by a radar system and a response received from the model of the environment 42 using the task configuration.

Examples may further relate to a computer program comprising a plurality of instructions that in response to being executed result in a computing device performing one or more of the above methods.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1.  A radar resource management system, comprising a processing circuit comprising a trained agent, which is configured to:
    determine a task configuration having a high utility, and set the task configuration as a record on a job list.

2.  The radar resource management system according to claim 1 wherein the trained agent is configured to receive as input data at least one task configuration indicating a use of radar resources and/or at least one task type indicating a task to be performed using the radar resource.

3.  The radar resource management system according to anyone of the preceding claims, wherein the trained agent is configured to receive as input data situational data indicating properties of an object to be observed using the radar resource.

4.  The radar resource management system according to anyone of the preceding claims, wherein the trained agent is configured to determine a task configuration having a high utility resource ratio.

5.  The radar resource management system according to claim 4, wherein the trained agent is configured to determine a task configuration having the high utility resource ratio according to the following equation:

$$\frac{u(c) - u(c_{in})}{r(c) - r(c_{in})}$$

wherein u is a function modelling task utility, r is a scalar measure for resource consumption and $c_{in}$ is an input task configuration.

6.  The radar resource management system according to anyone of the preceding claims, wherein the trained agent is based on a network topology having at least two interconnected layers of nodes, wherein the network topology is configured to not interconnect nodes associated to task configurations and to situational data between the first layer and the second layer.

7.  The radar resource management system according to anyone of the preceding claims, wherein the processing circuit further comprising a global optimizer, which is configured to:
    determine a selected task configuration from task configurations in the job list by maximizing a utility for available resources.

8.  The radar resource management system according to claims 1 to 7, wherein the trained agent is configured to:
    determine a selected task configuration from task configurations in a job list by maximizing a utility for available resources.

9.  An apparatus to train an agent in a radar system using reinforcement learning, comprising:
    a processing circuit comprising a model of an environment configured to:

    receive a task configuration as input data from the agent,
    determine a reward signal and a new task configuration based on the task configuration, and
    an output interface configured to output the reward signal and the new task configuration.

10. The apparatus according to claim 9, wherein the model of the environment is configured to determine the reward signal based on a utility resource ratio.

11. The apparatus according to claim 9 or 10, wherein the model of the environment is configured to determine the reward signal r, which is defined as the ratio of a change in utility du and a change in resource dr.

12. The apparatus according to claims 9 to 11, wherein the model of the environment comprises performance models and functions to determine resource requirements and utility evaluation of a task configuration.

13. The apparatus according to claim 9 to 12, wherein the a processing circuit is further configured to train the model of the environment based on task configurations used by a radar systems and a response received from an environment using the task configuration.

14. The apparatus according to claims 9 to 13, wherein the output interface is configured to output a task type and situational data.

15. A radar resource management system, comprising a processing circuit comprising a trained agent, which is configured to:
    determine a selected task configuration from multiple possible task configurations for a task, the selected task configuration resulting in a high utility for the resources used.

16. A radar resource management system, comprising a processing circuit comprising a trained agent, which is configured to:
schedule selected task configurations into a sequence, each selected task configuration being determined from multiple possible task configurations for a task such that a selected task configuration results in a high utility for the resources used.

17. A Method for managing radar resources, comprising determine a task configuration having a high utility and set the task configuration as a record on a job list.

18. A Method to train an agent in a radar system using reinforcement learning, comprising:

receive a task configuration as input data from the agent by a model of an environment, determine a reward signal and a new task configuration by the model of the environment based on the task configuration.

**Amended claims in accordance with Rule 137(2) EPC.**

1. A radar resource management system, comprising a processing circuit comprising a trained agent, which is configured to:

determine a task configuration having a high utility, the high utility being superior to a utility achieved by alternative task configurations that are principally also usable to fulfill an identical task and
set the task configuration as a record on a job list.

2. The radar resource management system according to claim 1 wherein the trained agent is configured to receive as input data at least one task configuration indicating a use of radar resources and/or at least one task type indicating a task to be performed using the radar resource.

3. The radar resource management system according to anyone of the preceding claims, wherein the trained agent is configured to receive as input data situational data indicating properties of an object to be observed using the radar resource.

4. The radar resource management system according to anyone of the preceding claims, wherein the trained agent is configured to determine a task configuration having a high utility resource ratio.

5. The radar resource management system according to claim 4, wherein the trained agent is configured to determine a task configuration having the high utility resource ratio according to the following equation:

$$\frac{u(c) - u(c_{in})}{r(c) - r(c_{in})}$$

wherein u is a function modelling task utility, r is a scalar measure for resource consumption and $c_{in}$ is an input task configuration.

6. The radar resource management system according to anyone of the preceding claims, wherein the trained agent is based on a network topology having at least two interconnected layers of nodes, wherein the network topology is configured to not interconnect nodes associated to task configurations and to situational data between the first layer and the second layer.

7. The radar resource management system according to anyone of the preceding claims,
wherein the processing circuit further comprising a global optimizer, which is configured to:

determine a selected task configuration from task configurations in the job list by maximizing a utility for available resources.

8. The radar resource management system according to claims 1 to 7, wherein the trained agent is configured to:

determine a selected task configuration from task configurations in a job list by maximizing a utility for available resources.

9. An apparatus to train an agent in a radar system using reinforcement learning, comprising:
a processing circuit comprising a model of an environment configured to:

receive a task configuration as input data from the agent,
determine a reward signal and a new task configuration based on the task configuration, the new task configuration being principally also usable to fulfill the task, and
an output interface configured to output the reward signal and the new task configuration.

10. The apparatus according to claim 9, wherein the model of the environment is configured to determine the reward signal based on a utility resource ratio.

11. The apparatus according to claim 9 or 10, wherein the model of the environment is configured to determine the reward signal r, which is defined as the ratio of a change in utility du and a change in resource dr.

12. The apparatus according to claims 9 to 11, wherein the model of the environment comprises performance models and functions to determine resource requirements and utility evaluation of a task configuration.

13. The apparatus according to claim 9 to 12, wherein the processing circuit is further configured to train the model of the environment based on task configurations used by a radar systems and a response received from an environment using the task configuration.

14. The apparatus according to claims 9 to 13, wherein the output interface is configured to output a task type and situational data.

15. A radar resource management system, comprising:
a processing circuit comprising a trained agent, which is configured to:
determine a selected task configuration from multiple possible task configurations for a task, the selected task configuration resulting in a high utility for the resources used, the high utility being superior to a utility achieved by alternative task configurations for the task.

16. A radar resource management system, comprising:
a processing circuit comprising a trained agent, which is configured to:
schedule selected task configurations into a sequence, each selected task configuration being determined from multiple possible task configurations for a task such that a selected task configuration results in a high utility for the resources used, the high utility being superior to a utility achieved by alternative task configurations for the task.

17. A method for managing radar resources, comprising:

determine a task configuration having a high utility using a radar resource management system according to one of claims 1 to 8 and
set the task configuration as a record on a job list.

18. A method to train an agent in a radar system using reinforcement learning, comprising:

receive a task configuration as input data from the agent by a model of an environment,
determine a reward signal and a new task configuration by the model of the environment based on the task configuration, the new task configuration being principally also usable to fulfill the task.

Figure 1a

$$(\text{task type}, \; c_{\text{in}}, \; \text{situational data}) \longrightarrow \boxed{\text{agent}} \overset{c}{\longrightarrow}$$

12

Figure 1b

Figure 1c

```
┌─────────────────────────────────────────────┐
│                                             │
│   determine a task configuration having a   │──── 101
│              high utility                   │
│                                             │
└─────────────────────────────────────────────┘
                      │
                      ▼
┌─────────────────────────────────────────────┐
│                                             │
│     set the task configuration as a         │──── 102
│            record on a job list             │
│                                             │
└─────────────────────────────────────────────┘
```

Figure 1d

```
┌───────────────────────────────────┐
│                                   │
│   ┌───────────────────────┐       │
│   │                       │────── 22
│   │    ┌──────────┐       │       │────── 20
│   │    │          │       │       │
│   │    │          │       │       │
│   │    └──────────┘       │       │
│   │                       │────── 21
│   └───────────────────────┘       │
│                                   │
└───────────────────────────────────┘
```

Figure 2a

tasks → agent based re-source allocation → selected jobs → scheduler → timeline

22

23

Figure 2b

Figure 3a

tasks →  | agent based combined resource alloca-<br>tion and scheduling | → timeline

32

Figure 3b

41 — 42 —    40<br>43

Figure 4a

$c$ → | environment | (task type, $c$, situational data), reward signal →

42

Figure 4b

action

agent → environment — 42

state ← reward du/dr

12, 22, 32

u

du

dr

r

Figure 4c

receive a task configuration as input data from the agent — 401

determine a reward signal and a new task configuration based on the task configuration — 402

Figure 4d

Europäisches
Patentamt

European
Patent Office

Office européen
des brevets

# EUROPEAN SEARCH REPORT

**Application Number**

EP 20 19 7187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/257968 A1 (MITRA SUBRATA [IN] ET AL) 13 August 2020 (2020-08-13) * paragraphs [0007] - [0009], [0034], [0098] - [0105]; claim 1 * ----- | 1-18 | INV. G05B13/02 G06N3/08 G01S7/41 |
| Y | Anonymous: "Reinforcement learning - Wikipedia", , 23 September 2019 (2019-09-23), XP055644207, Retrieved from the Internet: URL:https://en.wikipedia.org/w/index.php?title=Reinforcement_learning&oldid=917446307 [retrieved on 2019-11-19] * pages 2,4-5 * ----- | 1-18 | |
| Y | US 2018/302800 A1 (O'SHEA TIMOTHY JAMES [US]) 18 October 2018 (2018-10-18) * paragraphs [0060] - [0064]; claims 1-9; figure 6 * ----- | 1-18 | |
| Y | US 2020/019435 A1 (STEVENSON JEFFREY T [US] ET AL) 16 January 2020 (2020-01-16) * paragraph [0015]; claims 1-2; figure 7 * ----- | 1-18 | TECHNICAL FIELDS SEARCHED (IPC) G05B G06N G01S |

The present search report has been drawn up for all claims

| Place of search | Date of completion of the search | Examiner |
|---|---|---|
| Munich | 3 March 2021 | Kerschbaumer, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 7187

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2021

| Patent document cited in search report | | Publication date | Patent family member(s) | | Publication date |
|---|---|---|---|---|---|
| US 2020257968 | A1 | 13-08-2020 | NONE | | |
| US 2018302800 | A1 | 18-10-2018 | CN | 111247513 A | 05-06-2020 |
| | | | EP | 3612931 A1 | 26-02-2020 |
| | | | KR | 20200024764 A | 09-03-2020 |
| | | | US | 2018302800 A1 | 18-10-2018 |
| | | | US | 2019239085 A1 | 01-08-2019 |
| | | | WO | 2018195120 A1 | 25-10-2018 |
| US 2020019435 | A1 | 16-01-2020 | NONE | | |

EPO FORM P0459

For more details about this annex : see Official Journal of the European Patent Office, No. 12/82